(19) Europäisches Patentamt
European Patent Office
Office européen des brevets

(11) **EP 1 462 495 B1**

(12) **EUROPEAN PATENT SPECIFICATION**

(45) Date of publication and mention
of the grant of the patent:
**03.10.2007   Bulletin 2007/40**

(51) Int Cl.:
*C09D 11/18* (2006.01)

(21) Application number: **04251817.5**

(22) Date of filing: **26.03.2004**

(54) **Water based ink for ball-point pen and ball-point pen using the same**

Wässrige Tinte für Kugelschreiber und Kugelschreiber unter Verwendung derselben

Encre aqueuse pour stylo à bille et stylo à bille utilisant cette encre

(84) Designated Contracting States:
**DE FR GB IT**

(30) Priority: **26.03.2003   JP 2003084878**

(43) Date of publication of application:
**29.09.2004   Bulletin 2004/40**

(73) Proprietor: **Kabushiki Kaisha Pilot Corporation
Isesaki-shi,
Gunma (JP)**

(72) Inventor: **Ohno, Takashi
Isesaki-shi
Gunma (JP)**

(74) Representative: **Cross, Rupert Edward Blount
Boult Wade Tennant
Verulam Gardens
70 Gray's Inn Road
London WC1X 8BT (GB)**

(56) References cited:
EP-A- 0 626 276        EP-A- 0 819 737
EP-A- 0 964 036        EP-A- 1 002 663
EP-A- 1 029 898        EP-A- 1 146 097
US-A- 4 824 485        US-A- 5 769 931
US-A- 5 837 753        US-A- 5 929 135

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

The present invention relates to a water based ink for ball-point pen having a novel function and ball-point pen using the same, and more particularly to a water based ink for ball-point pen capable of writing on a non-permeable surface such as metal, glass or plastics and ball-point pen using the same.

Description of the Background Art

As a writing utensil capable of writing on a permeable surface such as a paper surface, a ball-point pen, having a ball-point pen tip rotatably supporting a ball at a tip portion of an ink tube, is already well known.

On the other hand, as a writing utensil capable of writing on a non-permeable surface such as metal, glass or plastics, there is known a marking pen having a pen tip generally formed by a fiber bundle. The marking pen is generally classified into a water based type employing a water solvent and an oil based type employing an oily solvent, and is widely employed for writing bold characters or writing on the aforementioned non-permeable surface, but such marking pen is associated with two inherent drawbacks.

A first drawback is that the pen tip, being formed by a fiber bundle, is very easily deformed or broken. The pen tip formed by the fiber bundle realizes a planer contact with the surface to be written, thus enabling a writing of a bold character. Also in case of writing on a non-permeable surface, the ink can be coated sufficiently according to the movement of the pen tip since a ball rotation as in the ordinary ball-point pen is not involved. However a fiber bundle is easily broken or deformed at the tip portion by writing, and cannot guarantee a constant writing width over a prolonged use. The pen tip formed by the fiber bundle tends to be deformed particularly in case of writing on a non-permeable surface such as of metal, glass or plastics harder than a paper surface.

A second drawback is that, because a volatile ink is generally employed, the writing becomes impossible when the pen is left uncapped even for a short period. The marking pen employs a pen tip formed by a fiber bundle as explained above, and is designed with an extremely larger ink flow-out from the pen tip in comparison with a ball-point pen, in order to real ize satisfactory writing of a bold character or on a non-permeable surface. The marking pen is characterized, by employing a volatile ink, in realizing suitable properties in the drying of writing, blotting of writing and penetration of writing to the rear side. On the other hand, the ink contained in the fiber bundle of the pen tip is in an exposed state, and shows a rapid viscosity increase or solidification upon drying-up, whereby the writing becomes impossible. A recent invention proposes a surface treatment on the fiber bundle to extend the service life, but a cautious attention is always required for the ink viscosity because the ink flows by a capillary action in the entire ink flow path from an ink adsorbent member to the fiber bundle at the pen tip.

An ink for an oily ball-point pen utilizing a dye is disclosed for example in JP-A Nos. 2002-226760 and 2002-36775. However, such ink has a low covering power and a low resistance to the exposure to sunlight because of the use of a dye, and the writing may fade out when the ink is used in an outdoor environment.

The marking pen has been employed widely, but involves inherent drawbacks in the factors providing advantageous effects as explained in the foregoing, thus leading to limitations in the use.

Also an ordinary aqueous ball-point pen cannot write on a non-permeable surface such as metal, glass or plastics.

As explained above, the marking pen and the ordinary ball-point pen are still defective in the writing on the non-permeable surface.

In order to resolve the aforementioned inherent drawbacks of the marking pen, there have been made various attempts to form the pen tip, instead of utilizing the fiber bundle, with a ball-point pen tip formed by meta or a resinous material as in the ball-point pen. However, a mere replacement of the marking pen structure with the ball-point pen structure in the pen tip cannot completely eliminate the aforementioned drawbacks but results in a new drawback. More specifically, on a non-permeable surface for example metal, glass or plastics, the ball does not rotate because a resistance on the surface of a ball receiving seat in the pen tip is larger than a resistance on the writing surface. In case such relationship stands on the ball, the ball cannot rotate because of the lack of a rotating force on the ball. Unless the ball can rotate, the ink does not flow out from the pen tip, so that satisfactory writing cannot be expected.

In case of the marking pen utilizing the fiber bundle for the pen tip, a uniform and thin ink film is transferred onto the writing surface because the pen tip is in planar contact with the writing surface. On the other hand, in the pen tip of a metal or a resinous material having a rotatable ball, the ink is not transferred as a thin and uniform film onto the writing surface but as a thick film because the contact between the ball and the writing surface is constituted by a continuation of point contacts. A thick ink film formed on the non-permeable surface tends to show a peeling after drying, and does not provide a satisfactory fixing property for the writing. Also in case of writing on a paper surface, an ink film discharged thicker than in the marking pen aggravates the rear penetration or the blotting of the writing.

As explained in the foregoing, various investigations have been made to improve the damage of the pen tip and the drying-up of the ink which are the inherent drawbacks of the marking pen, but none has realized a completely satisfactory performance.

SUMMARY OF THE INVENTION

The present invention is to provide an ink for a ball-point pen capable of satisfactory writing without being restricted by the properties of the writing surface, also being satisfactory in a fixing property, a covering power and a fastness, free from a rear penetration or a blotting of the writing on paper, and further capable of preventing ink drying on the pen tip, and a ball-point pen utilizing such ink. The present inventor, according to the invention, provides an ink for a ball-point pen, that not only resolves the inherent drawbacks of the prior marking pen but also enables the writing on the non-permeable surface not achievable with a ball-point pen, thereby greatly expanding the application of the ordinary ball-point pen, and a ball-point pen utilizing such ink.

The invention relates to a water based ink or ink composition for ball-point pen that includes a solvent formed by a water and an alcoholic solvent having a vapor pressure at 20˚C of 0.5 kPa or higher, a pigment constituting a coloring material, and a water-soluble resin constituting a writing fixing agent, and having an ink viscosity at 20˚C of 5 - 30 mPa.s. The water-soluble resin is present by 5 - 20 mass% with respect to a total amount of the ink composition. The water-soluble resin may be an acrylic resin. The acrylic resin may have a molecular weight of 5000 to 20000, a glass transition point of 40 to 150˚C and an acid value of 50 to 250.

The solvent formed by water and the alcoholic solvent may constitute 60 to 90 mass% of the entire amount of the ink composition, and the alcoholic solvent may constitute 5 to 15 mass% of the entire amount of the ink composition.

The pigment may constitute 1 to 10 mass% of the entire amount of the ink composition.

Another aspect of the present invention is a ball-point pen that includes, at a tip portion of an ink tube, a ball-point pen tip rotatably supporting a ball either directly or across a tip holder. An aforementioned ink is directly filled in the ink tube. The ball-point pen tip may include a valve mechanism which presses the ball, rotatably supported in the pen tip, in a non-use state to an internal wall of a pen tip ridge by a coil spring impinging on a rear end of the ball either directly or across a pressing member and which forms a gap between the internal wall of the pen tip ridge by a pressure at a writing thereby allowing the ink to flow out. The ink tube may be provided with an ink following member, in contact with an ink surface at a tail portion opposite to a mounting part at the front tip for writing. The ball-point pen tip may be formed by a stainless steel material and the ball has a surface roughness of 5 nm or less in an arithmetic average. The ball-point pen may be used on a non-permeable writing surface.

The ink viscosity in the invention is measured with a viscosimeter Model B8M, manufactured by Tokimec Co., at a revolution of a BL rotor of 12 rpm and under an environment of 20˚C.

The ink tube in the invention, in case the ink is filled in a cartridge of a ball-point pen refill accommodatable in a shaft tube or filled directly in the shaft tube, means such shaft tube, and is not restricted in the material or the structure as long as it is provided at a front tip portion with a ball-point pen tip rotatably supporting a ball.

BRIEF DESCRIPTION OF THE DRAWING

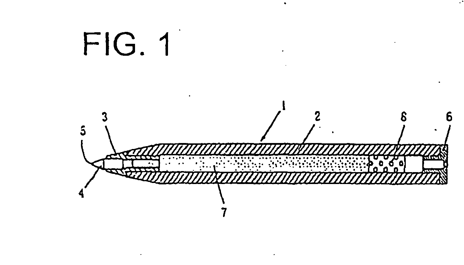

Fig. 1 is a schematic view of ball-point pen of the present invention.

DETAILED DESCRIPTION OF THE EMBODIMENTS

According to the present invention, the ink has a viscosity of 5- 30 mPa.s under a measuring environment of 20˚C. As explained in the foregoing, in writing on a non-permeable surface, the writing surface is often extremely smooth, thus hardly generating a driving force for causing rotation of the ball in the pen tip. As a result of intensive investigation, the present inventor finds that a prompt formation of an ink film on the ball surface in writing generates a situation where the ball can rotate even on a smooth writing surface. Although scientific clarification is not yet enough, the inventor estimates that there is a multiplying effect of a reduction of a rotation resistance by an ink filling of lubricating property around the ball receiving seat, and a formation of a wet rotation environment by the transfer of viscous ink onto the smooth writing surface.

A viscosity less than 5 mPa·s under a measuring environment of 20˚C enables satisfactory writing on a smooth non-permeable surface, but is unable to prevent a blotting or a rear penetration of the writing in case of writing on a paper surface. Also at a viscosity exceeding 30 mPa·s, a prompt ink film formation is not realized on the ball surface at the writing, and a satisfactory writing cannot be achieved on a smooth non-permeable surface.

The invention employs a pigment as the coloring material. The pigment is very advantageous as it can provide a writing of a high covering power on a non-permeable surface. Also, in comparison with a dye, it has a higher resistance for example to the exposure to sunlight, and is advantageous also in the use in an outdoor environment.

Also, as it forms a dried film extremely rapidly in a small gap formed between a pen tip member and the ball, there is provided an effect that the drying-up of the ink does not proceed into the interior of the pen tip member. A dry film forming property of the pigment, in case of a pen tip formed with a fiber bundle, inhibits the capillary action thereby causing a major difficulty in the ink flow. On the other hand, also in a ball-point pen provided with a ball-point pen tip formed by a metal or a resinous material, a writing failure is induced in case the drying-up proceeds into the interior of the pen tip. Based on the foregoing, the invention most efficiently prevents the writing failure caused by the ink drying-up by a combination of a ball-point pen tip formed with a metal or a resinous material and an ink utilizing a pigment of a high dry film forming property. A satisfactory writing can be realized by limiting the ink viscosity as explained in the foregoing. The dry film formation in the gap of the pen tip can also be realized by adding for example a polymer component in the ink composition, but, in consideration of the limitation in the ink viscosity, a satisfactory writing and a drying-up can be achieved most efficiently by employing a pigment as the coloring material added as an essential component. The pigment can be an organic pigment, an inorganic pigment or a modified pigment, such as carbon black, or a pigment of phthalocyanine type, azo type, quinacridone type, quinophthalone type, threne type or triphenylmethane type.

The invention employs, as a solvent, water and an alcoholic solvent having a vapor pressure at 20˚C of 0.5 kPa or higher. In the invention, the solvent is expected to exhibit functions of maintaining dispersion of the pigment and regulating volatility. The present inventor experimentally finds that a water and an alcoholic solvent having a vapor pressure at 20˚C of 0.5 kPa or higher are most effective. A content of a water and the alcoholic solvent is variable by a desired ink viscosity and other present components, however it is preferably 60 to 90 mass% with respect to the entire mass of the ink composition. A content less than 60 mass% is difficult to control the drying-up of the pen tip because of the low content of the solvent, while a content exceeding 90 mass% results. because of the large amount of the solvent, in a slow drying of the writing and tends to cause a deterioration of the fixing property and a blotting of the writing. A content of the alcoholic solvent having a vapor pressure at 20˚C of 0.5 kPa or higher is also variable according to the kind of the selected pigment, however it is preferably 5 to 15 mass% with respect to the entire mass of the ink composition. A content less than 5 mass% results in a slow drying of the writing, thus causing a rear penetration or a blotting of the writing depending on the paper. Also an effective film formation is delayed in the gap of pen tip, so that the drying-up of the ink may proceed into the interior of the pen tip in a certain environment of standing, thus resulting in a writing failure at the start of writing. A content exceeding 15 mass% may deteriorate the dispersion stability of the pigment depending on the polarity of the solvent, whereby the usable pigment becomes undesirably restricted. Also an ink evaporation from the surface of an ink tank becomes conspicuous, so that the ink tank is restricted in a material or a designing thereof. The alcoholic solvent employable in the invention is determined in consideration of matching with the pigment, but preferred examples of the alcoholic solvent include methanol, ethanol, 1-propanol, 2-propanol, 1-butanol, 2-butanol and t-butanol. It is also possible to select and use two or more of such alcoholic solvents in combination.

The invention employs a water-soluble resin for the purpose of improving a fixing property of the writing on a non-permeable surface. Though the pigment employed as the coloring material has a film forming property, but, in order to provide the writing with a friction resistance, it is necessary to blend a film forming agent also in view of an adhesion to the writing surface. However, also in this case, in consideration of the limitation in the ink viscosity, it is necessary to avoid selecting a resinous component which shows a high viscosity when dissolved in the ink. Also a dispersing agent becomes indispensable in order to maintain a stable dispersion of the pigment which is an essential component. A substance having a dispersing ability and a fixing ability at the same time provides an most efficient formulation in constructing an ink composition having a restriction in viscosity. The applicable a water-soluble resin is represented by an acrylic resin, which constitutes the water-soluble resin having the pigment dispersing ability and the fixing property after drying. The water-soluble resin has to be selected in consideration of the ink viscosity in addition to the dispersing ability and the fixing property as explained before. A larger content of the water-soluble resin improves the fixing property, but, in consideration of the ink viscosity, a content of 5 to 20 mass% with respect to the entire mass of the ink composition is most advantageous. A content less than 5 mass% is difficult to realize a satisfactory fixing property of the writing on a non-permeable surface, while a content exceeding 20 mass% tends to result in an increase in the ink viscosity and is difficult to realize a satisfactory writing-starting performance since a strong dried film is formed in the pen tip portion. The use of the water-soluble resin in such large amount is also one of the features of the present invention.

The usable water-soluble resin other than the acrylic resin can be, for example, an alkyd resin, a cellulose derivative, polyvinylpyrrolidone, or polyvinyl alcohol.

In case of employing an acrylic resin, it is desirable to select a grade having a molecular weight from 5000 to 20000, a glass transition point from 40 to 150˚C, and an acid value from 50 to 250. As already explained in detail, one of the features of the invention is to prevent drying of the pen tip by employing a ball-point pen tip formed by a metal or a resinous material at the pen tip, adopting a volatile ink, and forming a suitable dry film in the ink after drying. Also the realized effects include an improvement of the fixing property on the non-permeable surface by such dry film. In case of acrylic resin, a molecular weight less than 5000 cannot form a satisfactory dry film, and a high fixing property on the non-permeable surface cannot be expected. Also with a molecular weight exceeding 20000, the dry film at the pen tip becomes excessively strong, whereby a writing failure at the start of writing tends to be generated. Also a glass transition point less than 40°C tends to generate a soft film after drying, so that a satisfactory drying of the writing is difficult to obtain on the non-permeable surface. A glass transition point exceeding 150°C tends to generate a hard film after drying, so that the fixing property of the writing is undesirably impaired. An acid value less than 50 is difficult to provide a stable ink because the solubility in a water is lowered. Also an acid value exceeding 250 increases the mutual solubility with a water, thus impairing the water resistance of the writing. The present inventor confirmed the preferable ranges experimentally in order to resolve the aforementioned drawbacks and to attain the objectives.

The characteristics of the water-soluble resin to be employed are as explained before, however the water-soluble resin can be considered in a wider range by employing a ball-point pen tip of a metal or a resinous material at the pen tip, instead of a fiber bundle. As explained in the foregoing, a higher amount of addition of the water-soluble resin provides a better fixing property of the writing. Also a water-soluble resin of a high film forming property is selected as explained in the foregoing. A spreading of the water-soluble resin with such properties is difficult to realize in a writing utensil utilizing a fiber bundle as the pen tip, and can be realized by employing a ball-point pen chip of a metal or a resinous material as the pen tip. As an effect of such function, there is realized a fixing property of the writing on a non-permeable surface, not found in the prior marking pen.

In the ink composition, there may be added other additives for example a surfactant such as a phosphoric acid ester or an antirusting agent for realizing an ink wetting or improving the feeling of writing on the non-permeable surface and for obtaining an antirusting effect in case of employing a ball-point pen tip formed by a metal as the pen tip, also an antiseptic or an antimold agent such as 1,2-benzoisothiazolin-3-one for preventing rotting of the aqueous ink, a wetting regulating agent such as water-soluble denatured silicone oil for realizing a stable ink wetting on the non-permeable surface, and a fixing agent such as an acryl emulsion for further improving the fixing property of the writing on the non-permeable surface.

Examples

In the following, the present invention will be clarified further by examples.

Example 1

| | |
|---|---|
| Pigment Black 7 | 5.0 wt.% |
| water-soluble resin (acrylic resin component of trade name: HPD-96) | 4.5 wt.% |
| isopropyl alcohol | 7.0 wt.% |
| water | 80.8 wt.% |
| antirusting lubricant (trade name: A-208S) | 0.5 wt.% |
| triethanol amine | 1.0 wt.% |
| fixing property improving agent (acryl emulsion component of trade name: Johncryl 7001) | 0.8 wt.% |
| wetting property improving agent (trade name: KF-618) | 0.2 wt.% |
| 1,2-benzoisothiazolin-3-one | 0.2 wt.% |

There were employed Pigment Black 7 as the pigment coloring agent, a water as the solvent, and an acrylic resin of a trade name HPD-96 (manufactured by Johnson Polymer Inc.) having a molecular weight of 16, 500, a glass transition point of 102°C and an acid value of 240 as the water-soluble resin having the pigment dispersing function and the writing fixing ability. These components were exactly weighed in predetermined amounts and the pigment was uniformly dispersed in a ball mill to obtain a pigment dispersion. Then triethanol amine as a pH regulating agent, a phosphoric acid ester surfactant (trade name Prisurf A-208S, manufactured by Dai-ichi Kogyo Seiyaku Co.) as the antirusting lubricant, an acrylic emulsion (trade name Johncryl 7001, manufactured by Johnson Polymer Inc.) as the fixing property improving agent for the writing, a water-soluble denatured silicone oil (trade name KF-618, manufactured by Shin-etsu Chemical Co.) as the wetting improving agent on the non-permeable surface, and 1,2-benzoisothiazolin-3-one as the antimold agent were exactly weighed in predetermined amounts, then agitated under heating for 1 hour at an agitating temperature of 50°C with a disper agitator and was then gradually cooled to a liquid temperature of 30°C. Then the uniformly mixed liquid, under agitation in the disper, was gradually added with isopropyl alcohol of a predetermined amount having a vapor pressure of 4. 3 KPa at 20°C and was agitated for 20 minutes at 30°C to obtain a water based ink for ball-point pen, showing black color in writing and appearance. With respect to the components of the trade names HPD-96 and Johncryl 7001, the ink was designed in consideration of the respective effective solids thereof. Also the ink viscosity at 20˚C was selected as 5 mPa.s.

Example 2

ater based ink for ball-point pen showing green color in writing and appearance was prepared in the same manner as in Example 1, except for employing a green pigment Pigment Green 7 as the coloring material and also employing an acrylic resin (trade name Johncryl 60, manufactured by Johnson Polymer Inc.) having a molecular weight of 8,500, a glass transition point of 85˚C and an acid value of 215 as the water-soluble resin having the pigment dispersing function and the writing fixing ability, as shown in Table 1. With respect to the components of the trade names Johncryl 60 and Johncryl 7001, the ink was designed in consideration of the respective effective solids thereof.

Example 3

Water based ink for ball-point pen showing red color in writing and appearance was prepared in the same manner as in Example 1, except for employing a red pigment Pigment Red 170 as the coloring material as shown in Table 1. With respect to the components of the trade names HPD-96 and Johncryl 7001, the ink was designed in consideration of the respective effective solids thereof.

Example 4

Water based ink for ball-point pen showing black color in writing and appearance was prepared in the same manner as in Example 1, except for employing a styrene-maleic acid resin (trade name Arastar 703S, manufactured by Arakawa Kagaku Kogyo Co.) as the water-soluble resin, and a dispersing agent (trade name NIKKOL TL-10, manufactured by Nikko Chemicals Co.) as shown in Table 1. With respect to the components of the trade names Araster 703S and Johncryl 7001, the ink was designed in consideration of the respective effective solids thereof.

Example 5

Water based ink for ball-point pen showing black color in writing and appearance was prepared in the same manner as in Example 1, except for employing ethanol having a vapor pressure at 20˚C of 5. 9 KPa as shown in Table 1. With respect to the components of the trade names Johncryl 60 and Johncryl 7001, the ink was designed in consideration of the respective effective solids thereof.

Example 6

Water based ink for ball-point pen showing black color in writing and appearance was prepared in the same manner as in Example 1, except for increasing the amount of the water-soluble resin of the trade name HPD-96 as shown in Table 1. With respect to the components of the trade names HPD-96 and Johncryl 7001, the ink was designed in consideration of the respective effective solids thereof.

Examples 7 - 9

Water based ink for ball-point pen showing black color in writing and appearance were prepared in the same manner as in Example 1, except for eliminating the antirusting lubricant in Example 7, the fixing property improving agent in Example 8 and the wetting property improving agent on the non-permeable surface in Example 9, as shown in Table 1.

Example 10

A ball-point pen 1 is a direct filling ball-point pen directly containing the ink composition 7 of Example 1 in an ink tube 2 formed by a shaft tube, and a ball-point pen tip 4 formed by a stainless steel material and rotatably supporting a ball 5 is provided across a tip holder 3 at a front end of the ink tube 2.
In the ink tube 2, an ink following member 8 of grease state, capable of following the consumption of the ink, is provided in contact with an ink surface, at a tail end portion (at a side of a tail cap 6) opposite to the mounting part of the ball-point pen tip.

Comparative Examples 1 - 7

Inks for aqueous ball-point pen were prepared in the same manner as in Example 1, except for employing ink compositions as shown in Tables 3 and 4.

The ink viscosity was measured with a viscosimeter Model B8M, manufactured by Tokimec Co., at a revolution of a BL rotor of 12 rpm and under an environment of 20°C.

The Examples and the Comparative Examples are shown in following tables.

Table 1

| Example | | 1 | 2 | 3 | 4 | 5 |
|---|---|---|---|---|---|---|
| Pigment | Pigment Black 7 | 5.0 | - | - | 5.0 | 5.0 |
| | Pigment Green 7 | - | 7.0 | - | - | - |
| | Pigment Red 170 | - | - | 7.0 | - | - |
| Water-soluble resin | Johncryl 60 (acryl resin component) | - | 5.1 | - | - | 17.0 |
| | HPD-96 (acryl resin component) | 4.5 | - | 12.0 | - | - |
| | Arastar 703S (styrene-maleic acid resin component) | - | - | - | 12.0 | - |
| Dispersant | NIKKOL TL-10 (polyoxyethylene sorbitan fatty acid ester) | - | - | - | 3.0 | - |
| Solvent | isopropyl alcohol | 7.0 | 7.0 | 7.0 | 7.0 | - |
| | ethanol | - | - | - | - | 7.0 |
| | water | 80.8 | 78.2 | 71.3 | 70.3 | 68.3 |
| Antirusting lubricant | A-208S (phosphate ester surfactant) | 0.5 | 0.5 | 0.5 | 0.5 | 0.5 |
| pH regulating agent | triethanol amine | 1.0 | 1.0 | 1.0 | 1.0 | 1.0 |
| Fixation improving agent | Johncryl 7001 (acryl emulsion component) | 0.8 | 0.8 | 0.8 | 0.8 | 0.8 |
| Wetting regulating agent | KF-618 (water-soluble denatured silicone oil) | 0.2 | 0.2 | 0.2 | 0.2 | 0.2 |
| Antimold agent | 1,2-benzoisothiazolin-3-one | 0.2 | 0.2 | 0.2 | 0.2 | 0.2 |
| Ink viscosity | | 5.0 | 5.0 | 20.0 | 20.0 | 30.0 |
| Writing ability on non-permeable surface | | ◎ | ◎ | ◎ | ◎ | ○ |
| Drying of writing on non-permeable surface | | ○ | ○ | ◎ | ○ | ◎ |
| Fixing of writing on non-permeable surface | | ○ | ○ | ◎ | ○ | ◎ |
| Covering power of writing on non-permeable surface | | ◎ | ◎ | ◎ | ◎ | ◎ |
| Blotting of writing on paper | | ○ | ○ | ◎ | ○ | ◎ |
| Ink drying-up at pen tip | | ◎ | ◎ | ◎ | ◎ | ○ |

Table 2

| Example | | 6 | 7 | 8 | 9 | |
|---|---|---|---|---|---|---|
| Pigment | Pigment Black 7 | 5.0 | 5.0 | 5.0 | 5.0 | |
| | Pigment Green 7 | - | - | - | - | |
| | Pigment Red 170 | - | - | - | - | |

(continued)

| Example | | 6 | 7 | 8 | 9 | |
|---|---|---|---|---|---|---|
| Water-soluble resin | Johncryl 60 (acryl resin component) | - | - | - | - | |
| | HPD-96 (acryl resin component) | 7.0 | 12.0 | 12.5 | 12.0 | |
| | Arastar 703S (styrene-maleic acid resin component) | | | | | |
| Dispersant | NIKKOL TL-10 (polyoxyethylene sorbitan fatty acid ester) | - | - | - | - | |
| Solvent | isopropyl alcohol | 7.0 | 7.0 | 7.0 | 7.0 | |
| | ethanol | - | - | - | - | |
| | water | 78.3 | 74.3 | 73.6 | 73.5 | |
| Antirusting lubricant | A-208S (phosphate ester surfactant) | 0.5 | - | 0.5 | 0.5 | |
| pH regulating agent | triethanol amine | 1.0 | 0.5 | 1.0 | 1.0 | |
| Fixation improving agent | Johncryl 7001 (40) (acryl emulsion component) | 0.8 | 0.8 | - | 0.8 | |
| Wetting regulating agent | KF-618 (water-soluble denatured silicone oil) | 0.2 | 0.2 | 0.2 | - | |
| Antimold agent | 1,2-benzoisothiazolin-3-one | 0.2 | 0.2 | 0.2 | 0.2 | |
| Ink viscosity | | 10.0 | 20.0 | 20.0 | 20.0 | |
| Writing ability on non-permeable surface | | ◎ | ○ | ◎ | ○ | |
| Drying of writing on non-permeable surface | | ◎ | ◎ | ○ | ○ | |
| Fixing of writing on non-permeable surface | | ◎ | ○ | ○ | ○ | |
| Covering power of writing on non-permeable surface | | ◎ | ◎ | ◎ | ◎ | |
| Blotting of writing on paper | | ○ | ◎ | ◎ | ○ | |
| Ink drying-up at pen tip | | ◎ | ◎ | ◎ | ◎ | |

Table 3

| Comparative Example | | | 1 | 2 | 3 | 4 | 5 |
|---|---|---|---|---|---|---|---|
| Coloring material | Pigment | Pigment Black 7 | 5.0 | 5.0 | 5.0 | 5.0 | - |
| | Dye | Direct Black 154 | - | - | - | - | 7.0 |
| Water-soluble resin | | HPD-96 (acryl resin component) | 3.0 | 18.0 | 12.0 | - | 12.0 |
| Dispersant | | NIKKOL TL-10 (polyoxyethylene sorbitan fatty acid ester) | - | - | - | 3.0 | - |
| Solvent | | ethylene glycol | - | - | 5.0 | - | - |
| | | isopropyl alcohol | 7.0 | 7.0 | - | 7.0 | 7.0 |
| | | water | 82.3 | 67.3 | 75.3 | 82.3 | 71.3 |
| Antirusting lubricant | | A-208S (phosphate ester surfactant) | 0.5 | 0.5 | 0.5 | 0.5 | 0.5 |
| pH regulating agent | | triethanol amine | 1.0 | 1.0 | 1.0 | 1.0 | 1.0 |
| Fixation improving agent | | Johncryl 7001 (acryl emulsion component) | 0.8 | 0.8 | 0.8 | 0.8 | 0.8 |
| Wetting regulating agent | | KF-618 (water-soluble denatured silicone oil) | 0.2 | 0.2 | 0.2 | 0.2 | 0.2 |
| Antimold agent | | 1,2-benzoisothiazolin-3-one | 0.2 | 0.2 | 0.2 | 0.2 | 0.2 |

(continued)

| Comparative Example | 1 | 2 | 3 | 4 | 5 |
|---|---|---|---|---|---|
| Ink viscosity | 3. 0 | 35. 0 | 20. 0 | 3. 0 | 20. 0 |
| Writing ability on non-permeable surface | ◎ | × | Δ | ◎ | × |
| Drying of writing on non-permeable surface | × | - | × | × | - |
| Fixing of writing on non-permeable surface | × | - | × | × | - |
| Covering power of writing on non-permeable surface | × | - | × | × | - |
| Blotting of writing on paper | × | ◎ | × | × | × |
| Ink drying-up at pen tip | Δ | × | ○ | Δ | × |

Table 4

| Comparative Example | | | 6 | 7 | | | |
|---|---|---|---|---|---|---|---|
| Coloring material | Pigment | Pigment Black 7 | 5.0 | 5.0 | | | |
| | Dye | Direct Black 154 | - | - | | | |
| Water-soluble resin | | HPD-96 (acryl resin component) | - | 12.0 | | | |
| | | Arastar 703S (styrene-maleic acid resin component) | 2.5 | - | | | |
| Dispersant | | NIKKOL TL-10 (polyoxyethylene sorbitan fatty acid ester) | - | - | | | |
| Solvent | | ethylene glycol | - | 3.0 | | | |
| | | isopropyl alcohol | 7.0 | 7.0 | | | |
| | | water | 81.6 | 69.1 | | | |
| Antirusting lubricant | | A-208S (phosphate ester surfactant) | 0.5 | 0.5 | | | |
| pH regulating agent | | triethanol amine | 1.0 | 1.0 | | | |
| Fixation improving agent | | Johncryl 7001 (acryl emulsion component) | 2.0 | 2.0 | | | |
| Wetting regulating agent | | KF-618 (water-soluble denatured silicone | 0.2 | 0.2 | | | |
| Antimold agent | | 1,2-benzoisothiazolin-3-one | 0.2 | 0.2 | | | |
| Ink viscosity | | | 3.0 | 20.0 | | | |
| Writing ability on non-permeable surface | | | ◎ | ◎ | | | |
| Drying of writing on non-permeable surface | | | × | × | | | |
| Fixing of writing on non-permeable surface | | | × | × | | | |
| Covering power of writing on non-permeable surface | | | × | × | | | |
| Blotting of writing on paper | | | × | × | | | |
| Ink drying-up at pen tip | | | Δ | Δ | | | |

Also the shape and the structure of the ball-point pen tip are not limited to those in the foregoing example, and it is preferable, for improving the prevention of ink leakage, to incorporate a valve mechanism which presses the ball, rotatably supported in the pen tip, in a non-use state to an internal wall of a pen tip ridge by a coil spring impinging on a rear end of the ball either directly or across a pressing member and which forms a gap between the internal wall of the pen tip ridge by a pressure at a writing whereby allowing the ink to flow out.

Also the ball 8 to be employed in the present invention may be an ultra hard ball formed by an ultra hard material such as tungsten carbide, or a ceramic ball such as of silica, alumina, zirconia or silicon carbide, but, in order that the ball rotates also on a non-permeable surface such as metal, glass or plastics, a smaller rotation resistance is preferable between the ball and the ball seat surface as explained before. It is therefore preferable to employ a ceramic ball or a so-called mirror surface ball having a surface roughness of 5 nm or less in an arithmetic average roughness (Ra) and showing a low rotation resistance between the ball and the ball seat surface. The arithmetic average roughness (Ra) is obtained, as indicated by a following equation 1, by extracting a roughness curve, measured by a needle-contact type surface roughness measuring instrument (model: Form-Talsurf-S1F-50, manufactured by Taylor-Hobson Inc.) by a reference length L in a direction of an average line, and summing and averaging a deviation from an average line of the extracted portion to a measured curve.

## Equation 1

$$Ra = 1 / L * \int_0^1 |f(\chi)|$$

Testing method and evaluation

Each of the inks for the aqueous ball-point pen of Examples 1 - 9 and Comparative Examples 1 - 7 was evaluated and directly filled in the ink tube 2 of Example 10 to prepare a ball-point pen 1, which was evaluated in following tests.

(1) Writing ability on non-permeable surface

Writing on an untreated glass surface was evaluated:

⊚ specifications providing extremely satisfactory in ink flow-out and writing;
○ specifications providing satisfactory writing;
Δ specifications capable of writing but with certain line interruption;
✕ specifications incapable of writing.

(2) Drying of writing on non-permeable surface

1 g of ink was dropped on a glass plate and was squeezed to an ink film thickness of 10 $\mu$m, and the state of the ink film was observed and evaluated under a test environment of 23 $\pm$ 2°C and a humidity of 50 $\pm$ 5 %RH:

⊚ specifications providing complete drying of the ink film less than 20 seconds;
○ specifications providing complete drying of the ink film within 20 to 30 seconds;
Δ specifications providing complete drying of the ink film within 40 to 50 seconds;
✕ specifications requiring 60 seconds or more for ink dry i ng.

(3) Fixation of writing on non-permeable surface

1 g of ink was dropped on a glass plate, then was squeezed to an ink film thickness of 10 $\mu$m, was let to stand for 10 minutes in a test environment of 23 $\pm$ 2°C and a humidity of 50 $\pm$ 5 %RH, and was rubbed 10 times with a cotton cloth under a load of 100 gf/cm$^2$, and the state of the dried ink film thereafter was observed:

⊚ specifications showing no peeling at all of the dried ink film;
○ specifications showing a very slight damage on the ink film:
Δ specifications showing a damage on the ink film;
✕ specifications showing a damage in a half or more of the ink film.

(4) Covering power of writing on non-permeable surface

1 g of ink was dropped on a glass plate and was squeezed to an ink film thickness of 10 $\mu$m, then the glass plate was placed on a printed character and an observation was made to judge whether the printed character is legible.

⊚ ink specifications cover i ng the g l ass surface, so that the underlying printed character was not legible at all;
○ ink specifications in which the underlying printed character was slightly detectable as a trace;
✕ ink specifications in which the underlying printed character was clearly legible.

(5) Blotting of writing on paper surface

A straight line was drawn on a writing paper A (JIS P3201) in a test environment of 23 ± 2˚C and a humidity of 50 ± 5 %RH, and under conditions of a writing load of 100 gf and a writing speed of 4 m/min, and a blotting generated on the writing was observed:

◎ extremely satisfactory writing without any blotting;
○ writing with practically acceptable blotting;
∆ writing with somewhat unacceptable blotting;
☓ writing with very unacceptable blotting.

(6) Ink drying-up on pen tip

The pen was let to stand for 24 hours in a cap-off state in an environment of 23 ± 2˚C and a humidity of 50 %RH. then a straight line was drawn on a writing paper A (JIS P3201) under a writing load of 100 gf and a state at the start of writing was observed:

◎ specifications providing a satisfactory writing within 2 cm from the start of writing;
○ specifications providing a satisfactory writing in 2 - 4 cm from the start of writing;
∆ specifications providing a satisfactory writing in 5 - 7 cm from the start of writing;
☓ specifications not providing a satisfactory writing for 7 cm or more from the start of writing.

(Evaluation)

Comparative Example 1 had an excessively low ink viscosity of 3 mPa·s. It was capable of satisfactory writing on the non-permeable surface, but showed an evident blotting on the paper surface because of an excessively low ink viscosity. Also because of the excessively low ink viscosity, the ink flow-out control at the pen tip did not function satisfactorily to result in an excessive ink flow-out, thus deteriorating the drying property of writing and the fixation of writing.

Comparative Example 2 had an excessively high ink viscosity of 35 mPa.s. Because of the excessively high ink viscosity, it was incapable of satisfactory writing on the non-permeable surface and was therefore excluded from the evaluation.

Comparative Example 3 employed a water and ethylene glycol having a vapor pressure at 20˚C of $7.0 \times 10^{-4}$ KPa as the solvent. Because of a significantly lowered drying property of the ink, the drying property of writing, the fixation of writing and the blotting of writing on paper surface became inferior.

Comparative Example 4 was of specifications of executing the pigment dispersion by a surfactant, without employing a water-soluble resin. Although the writing on the non-permeable surface was possible, the drying property of writing, the fixation of writing and the blotting of writing were significantly inferior.

Comparative Example 5 was of specifications employing a dye instead of a pigment. Because the ink drying at the pen tip proceeded rapidly into the interior of the pen tip, a sufficient writing performance could not be obtained on the non-permeable surface and it was excluded from the evaluation. Also, though it was capable of satisfactory writing on paper, but the writing showed an evident blotting because of a strong penetrability of the writing.

Comparative Example 6 employed a styrene-maleic acid resin instead of the acrylic resin, but provided performances similar to those of Comparative Example 1 because of an excessively low ink viscosity as in Comparative Example 1.

Comparative Example 7 employed a water and ethylene glycol having a vapor pressure at 20˚C of $7.0 \times 10^{-4}$ KPa in combination as the solvent. Because the properties of ethylene glycol were exhibited, the drying property of writing, the fixation of writing and the blotting of writing on paper were significantly inferior.

When the inks for aqueous ball-point pen of Examples 1 to 9 were employed in a marking pen having a pen tip formed with a fiber bundle, though such examples being not described in the tables nor illustrated, Examples 3 to 9 were incapable of writing because of an excessively high ink viscosity. Also Examples 1 and 2 showed complete drying at the pen tip in the ink drying-up performance, and were incapable of writing.

The present invention provides an excellent effect enabling writing also on a non-permeable surface by a particular ink composition.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

## EP 1 462 495 B1

**Claims**

1. A water-based ink for a ball-point pen comprising a solvent formed by a water and an alcoholic solvent having a vapor pressure at 20˚C of 0.5 kPa or higher, a pigment constituting a coloring material, and a water-soluble resin constituting a writing fixing agent, wherein an ink viscosity at 20˚C is within a range of 5 to 30 mPas measured using a viscometer at a revolution of a BL rotor of 12 rpm at 20˚C, and wherein the water-soluble resin is present by 5 to 20 mass% with respect to a total amount of the ink composition.

2. A water-based ink according to claim 1, wherein the water-soluble resin is an acrylic resin.

3. A water-based ink according to claim 2, wherein the acrylic resin has a molecular weight of 5000 to 20000, a glass transition point of 40 to 150˚C and an acid value of 50 to 250.

4. A water-based ink according to any one of claims 1 to 3, wherein the solvent formed by the water and the alcoholic solvent constitutes 60 to 90 mass% of the entire amount of the ink composition, and the alcoholic solvent constitutes 5 to 15 mass% of the entire amount of the ink composition.

5. A water-based ink according to any one of claims 1 to 4, wherein the pigment constitutes 1 to 10 mass% of the entire amount of the ink composition.

6. A ball-point pen including, at a tip portion of an ink tube, a ball-point pen tip rotatably supporting a ball either directly or across a tip holder, wherein an ink according to any one of claims 1 to 5 is directly filled in the ink tube.

7. A ball-point pen according to claim 6, wherein the ball-point pen tip includes a valve mechanism which presses the ball, rotatably supported in the pen tip, in a non-use state to an internal wall of a pen tip ridge by a coil spring impinging on a rear end of the ball either directly or across a pressing member and which forms a gap between the internal wall of the pen tip ridge by a pressure at a writing thereby allowing the ink to flow out.

8. A ball-point pen according to claim 6 or claim 7, wherein the ink tube is provided with an ink following member, in contact with an ink surface at a tail portion opposite to a mounting part at the front tip for writing.

9. A ball-point pen according to any one of claims 6 to 8, wherein the ball pen tip is formed by a stainless steel material and the ball has a surface roughness of 5 nm or less in an arithmetic average.

10. A ball-point pen according to any one of claims 6 to 9, updated for use on a non-permeable writing surface.

**Patentansprüche**

1. Auf Wasser basierende Tinte für einen Kugelschreiber, umfassend ein Lösungsmittel, welches aus Wasser und einem alkoholischen Lösungsmittel mit einem Dampfdruck bei 20˚C von 0.5 kPa oder höher gebildet ist, ein Pigment, welches ein Färbematerial darstellt, und ein wasserlösliches Harz, welches ein Schreibfixierungsmittel darstellt, wobei die Viskosität der Tinte bei 20˚C in einem Bereich von 5 bis 30 mPas liegt, wie unter Verwendung eines Viskosimeters bei einer Drehzahl eines BL-Rotors von 12 Upm bei 20˚C gemessen, und wobei das wasserlösliche Harz in Bezug auf die Gesamtmenge der Tintenzusammensetzung in 5 bis 20 Massen-% zugegen ist.

2. Auf Wasser basierende Tinte nach Anspruch 1, wobei das wasserlösliche Harz ein Acrylharz ist.

3. Auf Wasser basierende Tinte nach Anspruch 2, wobei das Acrylharz ein Molekulargewicht von 5000 bis 20000, einen Glasübergangspunkt von 40 bis 150˚C und einen Säurewert von 50 bis 250 aufweist.

4. Auf Wasser basierende Tinte nach einem der Ansprüche 1 bis 3, wobei das aus Wasser und dem alkoholischen Lösungsmittel gebildete Lösungsmittel 60 bis 90 Massen-% der Gesamtmenge der Tintenzusammensetzung ausmacht, und wobei das alkoholische Lösungsmittel 5 bis 15 Massen-% der Gesamtmenge der Tintenzusammensetzung ausmacht.

5. Auf Wasser basierende Tinte nach einem der Ansprüche 1 bis 4, wobei das Pigment 1 bis 10 Massen-% der Gesamtmenge der Tintenzusammensetzung ausmacht.

**6.** Kugelschreiber, umfassend eine Kugelschreiberspitze, in welcher eine Kugel entweder direkt oder über einen Spitzenhalter rotierbar gelagert ist, an einem Teil der Spitze eines Tintenröhrchens, wobei eine Tinte nach einem der Ansprüche 1 bis 5 direkt in das Tintenröhrchen eingefüllt ist.

**7.** Kugelschreiber nach Anspruch 6, wobei die Kugelschreiberspitze einen Ventilmechanismus umfasst, welcher die Kugel, die in der Kugelschreiberspitze rotierbar gelagert ist, in einem Zustand der Nichtbenutzung mittels einer auf die Rückseite der Kugel einwirkenden Sprungfeder entweder direkt oder über ein Presselement an eine Innenwand eines Randes der Kugelschreiberspitze drückt, und welcher durch einen Druck beim Schreiben einen Spalt zwischen der Innenwand des Randes der Kugelschreiberspitze bildet, wodurch ein Ausfließen der Tinte ermöglicht wird.

**8.** Kugelschreiber nach Anspruch 6 oder Anspruch 7, wobei das Tintenröhrchen mit einem der Tinte nachfolgenden Element bereitgestellt ist, welches in einem hinteren Teil, der einem Befestigungselement der zum Schreiben dienenden vorderen Spitze gegenüber liegt, mit einer Tintenoberfläche in Kontakt steht.

**9.** Kugelschreiber nach einem der Ansprüche 6 bis 8, wobei die Kugelschreiberspitze aus einem rostfreien Stahlmaterial gebildet ist und die Kugel im arithmetischen Mittel eine Oberflächenrauigkeit von 5 nm oder weniger aufweist.

**10.** Kugelschreiber nach einem der Ansprüche 6 bis 9, welcher für die Verwendung auf einer undurchlässigen Schreiboberfläche angepasst ist.

**Revendications**

**1.** Encre aqueuse pour un stylo à bille, comprenant un solvant formé d'eau et d'un solvant alcoolique ayant une pression de vapeur à 20˚C égale ou supérieure à 0,5 kPa, un pigment servant de matière colorante, et une résine hydrosoluble servant d'agent de fixage lors de l'écriture, la viscosité de l'encre à 20˚C étant de 5 à 30 mPas mesurée au moyen d'un viscosimètre à une vitesse d'un rotor BL de 12 tr/min à 20˚C, dans laquelle la résine hydrosoluble est présente en une quantité de 5 à 20 % en masse sur la base de la quantité totale de la composition d'encre.

**2.** Encre aqueuse suivant la revendication 1, dans laquelle la résine hydrosoluble est une résine acrylique.

**3.** Encre aqueuse suivant la revendication 2, dans laquelle la résine acrylique a un poids moléculaire de 5000 à 20 000, un point de transition vitreuse de 40 à 150˚C et un indice d'acide de 50 à 250.

**4.** Encre aqueuse suivant l'une quelconque des revendications 1 à 3, dans laquelle le solvant formé par l'eau et le solvant alcoolique représente 60 à 90 % en masse de la quantité totale de la composition d'encre, et le solvant alcoolique représente 5 à 15 % en masse de la quantité totale de la composition d'encre.

**5.** Encre aqueuse suivant l'une quelconque des revendications 1 à 4, dans laquelle le pigment représente 1 à 10 % en masse de la quantité totale de la composition d'encre.

**6.** Stylo à bille comprenant, à un embout d'un tube d'encre, un embout de stylo à bille portant, de manière apte à la rotation, une bille directement ou par un support d'embout, dans lequel une encre suivant l'une quelconque des revendications 1 à 5 remplit directement le tube d'encre.

**7.** Stylo à bille suivant la revendication 6, dans lequel l'embout du stylo à bille comprend un mécanisme de valve qui presse la bille, portée de manière à permettre la rotation dans l'embout du stylo, lors de la non-utilisation, à une paroi intérieure d'une nervure d'embout de stylo par un ressort hélicoïdal frappant une extrémité postérieure de la bille directement ou par un élément presseur et qui forme un intervalle entre la paroi intérieure de la nervure de l'embout de stylo sous l'action d'une pression lors de l'écriture, permettant ainsi à l'encre de s'écouler.

**8.** Stylo à bille suivant la revendication 6 ou la revendication 7, dans lequel le tube d'encre est muni d'un élément suiveur d'encre, en contact avec une surface d'encre à une portion de queue opposée à une pièce de montage au niveau de l'embout frontal pour l'écriture.

**9.** Stylo à bille suivant l'une quelconque des revendications 6 à 8, dans lequel l'embout du stylo à bille est formé par un acier inoxydable et la bille a une rugosité de surface égale ou inférieure à 5 nm en moyenne arithmétique.

10. Stylo à bille suivant l'une quelconque des revendications 6 à 9, modifié pour l'utilisation sur une surface d'écriture non perméable.

FIG. 1

**EP 1 462 495 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002226760 A

- JP 2002036775 A